(19) **Europäisches Patentamt / European Patent Office / Office européen des brevets**

(11) **EP 1 882 160 B1**

(12) # EUROPEAN PATENT SPECIFICATION

(45) Date of publication and mention
of the grant of the patent:
**14.01.2015 Bulletin 2015/03**

(21) Application number: **06727067.8**

(22) Date of filing: **10.05.2006**

(51) Int Cl.:
**G01D 5/353** *(2006.01)*    **G01D 5/48** *(2006.01)*
**G02B 6/02** *(2006.01)*

(86) International application number:
**PCT/GB2006/001707**

(87) International publication number:
**WO 2006/123103 (23.11.2006 Gazette 2006/47)**

(54) **FIBER OPTIC POSITION TRANSDUCER WITH MAGNETOSTRICTIVE MATERIAL AND corresponding method**

FASEROPTISCHER POSITIONSWANDLER MIT EINEM MAGNETOSTRIKTIVEN MATERIAL UND zugehöriges Verfahren

TRANSDUCTEUR DE POSITION A FIBRE OPTIQUE AVEC MATERIAU MAGNETOSTRICTIF ET PROCÉDÉ CORRESPONDANT

(84) Designated Contracting States:
**AT BE BG CH CY CZ DE DK EE ES FI FR GB GR HU IE IS IT LI LT LU LV MC NL PL PT RO SE SI SK TR**

(30) Priority: **17.05.2005 BR PI0501790**

(43) Date of publication of application:
**30.01.2008 Bulletin 2008/05**

(73) Proprietors:
• **Petroleo Brasileiro S.A. - PETROBRAS**
 **CEP 20035-900-Rio de Janeiro (BR)**
• **Pontificia Universidade Catolica Do Rio de Janeiro**
 **Gavea Rio de Janeiro RJ (BR)**

(72) Inventors:
• **ARIAS VIDAL, José Luis**
 **CEP-20.520-050, Rio de Janeiro, RJ (BR)**

• **MUNOZ FREITAS, Ricardo**
 **CEP-20.510-060 Rio de Janeiro, RJ (BR)**
• **BARBOSA BRAGA, Arthur Martins**
 **CEP-22.441-030 Rio de Janeiro, RJ (BR)**
• **GUEDES VALENTE, Luis Carlos**
 **CEP-22.061-000 Rio de janeiro, RJ (BR)**
• **OLIVEIRA BRUNO, Antônio Carlos**
 **CEP-22.471-230 Rio de Janeiro, RJ (BR)**
• **CARVALHO, Hélio Ricardo**
 **CEP-20.766-100 Rio de Janeiro, RJ (BR)**

(74) Representative: **Roberts, Mark Peter**
 **J A Kemp**
 **14 South Square**
 **Gray's Inn**
 **London WC1R 5JJ (GB)**

(56) References cited:
**EP-A- 1 020 734    CA-A1- 2 196 617**
**US-A- 5 394 488    US-A- 5 680 489**
**US-B2- 6 563 968**

## Description

The present invention refers to position transducers and methods of measuring the position of equipment, preferably in deep wells in onshore and offshore installations. Specifically it is of application on flow control valves, called "choke".

Some manufacturers have commercially developed fiber optic position transducers based on interferometry or light intensity. Fiso's position transducer falls into this first category, as described in the article, "Fiso'sWhite-Light Fabry-Perot Fiber-Optics Sensors"; Fiso Technologies Inc. The Philtec position transducer, presented in "Philtec Fiber optic Displacements Sensors", Philtec Inc. 2002, currently uses measurement of light intensity. Other well known devices, that have not reached the commercial stage, are: The transducer on an arm based on interferometry, described by F.Ruan; Y.Zhou; Y.Loy; S.Mei, Ch.Liaw and J.Liu in the article, "A Precision Fiber Optic Displacement Sensor Based on Reciprocal Interferometry"; Optics Communication, No. 176, pp 105-112, 2000, and the transducer based on reflective prisms, describe by Y. Takamatsu; K. Tomota and T. Yamashita in "Fiber-optic Position Sensor; Sensors and Actuators", N° A21-A23, pp 435 - 437, 1990.

Transducers that are based on interferometry depend on the use of an opening from which the light exits the fiber to be reflected by some type of mirror. This presents a weakness, since the mirror can be displaced in relation to the fiber, leading to the need to mechanically align the light beam as well as problems related to the cleanliness of the optical surfaces (tip of the fiber and mirror). Moreover, if dealing with transducers that must be located at the end of the fiber, serial multiplexing is not possible.

The high sensitivity to angular misalignment of the fiber optic line in relation to the surface is one disadvantage of transducers based on light intensity that require a visually homogeneous target surface, with reduced result precision when the surface is less reflective.

Magnetostriction, that occurs in the majority of cases with ferro-magnetic materials, is a variation in the length of a segment subject to a magnetic field; the magnetostrictive material expands or contracts in response to changes in the strength of the magnetic field in the area where the segment is found. This effect is symmetrical in relation to the applied field, with distortions in only one direction, independent of the magnetic field signal.

Some applications already exist that use these magnetostrictive materials (in the construction of devices for measuring magnetic field and torque for example) but up until now, there are few that are large enough to use as position sensors. Among these are found patents JP10253399-A and US6232769-BI, and those that are described in the articles, "Dynamic behavior of Terfenol-D", by Koshi Kondo; J. of Alloys and Compounds 258 (1997) 56-60; "On the calibration of position sensor based on magnetic delay lines" by E.Hristoforou, H.Chiriac, M.Neagu, V.Karayannis; Sensors and Actuators, A 59 (1997) 89-93; "A coily magnetostrictive delay line arrangement for sensing applications", by E.Hristoforou, D.Niarchos, H.Chiriac, M.Neagu; Sensors and Actuators A 91 (2001) 91 -94 and "New position sensor based on ultra acoustic standing waves in FeSiB amorphous wires", by H.Chiriac, C.S.Marinescu ; Sensors and Actuators 81 (2000) 174-175. All the cited applications above are based on the principal of acoustic wave propagation through a connecting rod (stem/rod) or waveguide made with magnetostrictive material. The sensor elements are inductive or optic, and position is determined by measuring the time interval related to the position of the emitting element, a bobbin or a magnetic or an electromagnetic element. All require an electronic circuit next to the location of the measurement and have a dynamic range of between 30mm to 300mm.

Similarly, the position measuring device described in patent US 5,821,743 is a device that includes a magnetostrictive waveguide that extends through a measured field, and a means to produce a signal that shows the position of a magnet. It is endowed with a piezoceramic element.

EP 1,020,734 A discloses a position sensor that uses an optical fibre having one or more gratings thereon. Each grating has a different grating period that is preferably equal to half of the wavelength of an injected coherent light. Each grating is separately clad by a magnetostrictive cladding that alters the grating period when exposed to a magnetic field. Light reflected from the grating is routed to a diffraction grating and the intensity of light at each wavelength is measured to determine position.

Patent US 5,394,488, which presents a speed sensor, and the article "A Magnetostrictive sensor interrogated by fiber gratings for DC-current and Temperature discrimination", by J.Mora, A.Díez, J.L.Cruz, M.V. Andrés; IEEE Photonics Tech. Letters 12 (2000) 1680-1682, does not refer to the measurement of position. They solve the cited problems based on the joint use of magnetostrictive material and Fiber Bragg Grating Sensors.

By including the information from its optic specter, Fiber Bragg Grating Sensors supply an absolute measurement that is easily multiplexed, with applications where traditional sensing systems have shown to be inefficient. The wavelength variation values of a Fiber Bragg Grating Sensor are related to variations in temperature and distortions through the equation:

$$\Delta\lambda_B/\lambda_B - K_1 \, \Delta T + K_{2\epsilon} \quad (I)$$

where $\lambda_B$ is the value, in meters, of the wavelength reflected by the sensor, $\Delta T$ is the temperature variation, in °C, and represents the distortion suffered by the sensor, in m/m, and $K_1$ and $K_2$ are constants that depend upon the specific assembly.

Diverse techniques have been used in the different types of position transducers currently known: capacitive, optical, inductive and fiber optic.

The prevailing technique uses electric induction as the functioning principle. The main advantage of this type of position transducer over the others is its highly resistant quality, since due to the absence of physical contact there is little wear on the sensor element. Its great advantage over the previous ones is its capacity to work under severe conditions with no changes in its performance in humid environments and vibrations. However, they are susceptible to electromagnetic interferences.

The most recent technology is based on fiber optics. There is not one, but several techniques which have in common the use of fiber optics as a light guide used for measurement. Among these techniques are those based on Bragg networks, which, until now, has not yet been applied to position transducers.

A great advantage of fiber optic sensors and transducers, beyond its good performance and simplicity of construction, is the absence of electric signals next to the measurement point, which makes these sensors and transducers totally safe for applications in classified areas.

One aim of the present invention is to develop a position transducer based on the Bragg Network technology using highly reliable, robust fiber optics, especially suitable for the outflow control valve on the inside of an oil well.

The invention provides in one aspect a fiber optic position transducer for uniaxial movements based on the properties of a magnetostrictive material and that uses Bragg networks as sensing elements.

Changes in the relative position between a magnetic field source and a segment of magnetostrictive material, (connected to Fiber Bragg Grating Sensors) cause changes in the size of this segment, which induces alterations in the wavelengths reflected by the Fiber Bragg Grating Sensors. When the spatial dependence of the magnetic field is known, wavelengths reflected by the sensors will be related to the displacement which has occurred. The invention also provides processes for calibrating the position of the fiber optic position transducer.

The invention provides a position transducer including: a magnetic or electromagnetic element; at least one segment of magnetostrictive material; at least two Fiber Bragg Grating Sensors; a supporting member movable with respect to the magnetic or electromagnetic element; an optical fiber; and a remote reading system containing a broadband light source, a coupler and a spectral analysis and detection system; wherein at least one of said two sensors is fixed to said at least one segment of magnetostrictive material, said at least one segment of magnetostrictive material is supported by said supporting member, and the movement of the supporting member relative to the magnetic or electromagnetic element is limited to a single axis.

These and other aims and advantages of this invention, will be more completely understood and appreciated by a careful study of the following more detailed description of the presently preferred exemplary embodiments of the invention taken in conjunction with the accompanying drawings, in which:

FIGURE 1 is a drawing that shows the basic configuration of the position transducer in accordance with an example embodiment of the present invention;

FIGURE 2 is a drawing that shows a first variation of the basic configuration of the position transducer in accordance with an example embodiment of the present invention;

FIGURE 3 is a drawing that shows a second variation of the basic configuration of the position transducer in accordance with an example embodiment of the present invention;

FIGURE 4 is a drawing that shows the connection of modules constructed according to the second variation of the basic configuration of the position transducer in accordance with an example embodiment of the present invention;

FIGURE 5 is a drawing that shows a third variation of the basic configuration of the position transducer in accordance with an example embodiment of the present invention;

FIGURE 6 is a drawing that shows the connection of modules constructed according to the third variation of the basic configuration of the position transducer in accordance with an example embodiment of the present invention;

FIGURE 7 is an example of a graph showing wavelength measurements from two Fiber Bragg Grating Sensors as a function of position, in the basic configuration of the position transducer in accordance with an example embodiment of the present invention;

FIGURE 8 is an example of a graph showing the spatial dependence of the magnetic field in an application of the basic configuration of the position transducer in accordance with an example embodiment of the present invention;

FIGURE 9 is an example of a graph that shows the spatial dependence of the magnetic field in an application of the third variation of the basic configuration of the position transducer in accordance with an example embodiment of the present invention;

FIGURE 10 is an example of a graph showing wavelength measurements from two Fiber Bragg Grating Sensors as a function of position, in an application of the third variation of the basic configuration of the position transducer in accordance with an example embodiment of the present invention; and

FIGURE 11 is an example of a graph relating the difference of the wavelength measurements from two Fiber Bragg Grating Sensors with the position, in an application of the third variation of the basic configuration of the position transducer in accordance with an example embodiment of the present invention.

A detailed explanation is given of a fiber optic position transducer with magnetostrictive material and Fiber Bragg Grating Sensors in flow control valves (choke), suitable for use in onshore and offshore installations of deep wells. The invention of course is not so limited and this description is given by way of example only.

The position transducer is resistant to high pressures and temperatures, with high sensitivity, simple construction, is compact, and uses Fiber Bragg Grating Sensors (FBG) with a magnetostrictive material.

The principle upon which the present invention is based has to do with the relative displacement between a magnetic field source and a segment of magnetostrictive material, which is connected to one or more Fiber Bragg Grating Sensors. Changes in the relative position between a magnetic field source and a segment of magnetostrictive material causes changes in the size of this segment and, for this reason, in the sensor to which it is connected, which induces alterations in the wavelengths reflected by the Fiber Bragg Grating Sensors. Once the spatial dependence of the magnetic field is known, the.wavelengths reflected by the sensor are related to the displacement which has occurred.

As the temperature is a factor that can cause alterations in the wavelength of a Fiber Bragg Grating Sensor, the present invention is characterized by the use of at least two Fiber Bragg Grating Sensors, to guarantee the necessary compensation for the effect of the temperature.

The sensor can be made of a permanent magnet and/or by the application of a magnetic field (e.g. by using an electromagnet).

Preferably, the Fiber Bragg Grating Sensors are made of the same optical fiber. This is advantageous due to its pure simplicity, allowing optical connection elements to be dispensed with, and due to the possibility of measuring other lengths throughout this same fiber.

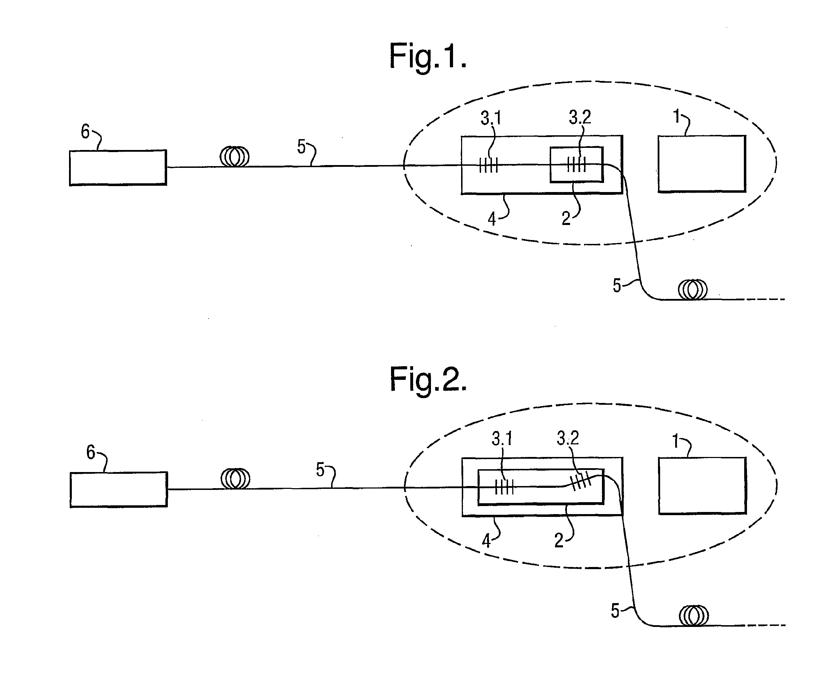

A drawing of the basic configuration of the position transducer in accordance with an example embodiment of the present invention is shown in FIGURE 1. A magnetic or electromagnetic element, hereinafter called magnet 1, preferably made of NdFeB (Neodymium Iron Boron), and a supporting member 4, in the form of a rod, preferably of material impermeable to magnetic fields, are supported and aligned so that they may suffer relative displacement only along the longitudinal axis defined for rod 4. A segment of magnetostrictive material 2 is fixed to the end of the rod 4, which may be made of, for example, a metal alloy of TbDyFe (Terbium, Dysprosium and Iron), such as TX, Terphenol-D or others. The magnet 1 and the end of the rod 4 are close enough to each other so that the relative displacements between them causes variations in the dimensions of the segment of magnetostrictive material 2, measurable by the reading system 6. Fiber Bragg Grating Sensors 3.1 and 3.2 have different wavelengths, equal respectively to $\lambda_1$ and $\lambda_2$, and in this embodiment are made of the same optical fiber 5. In the basic configuration of the invention presented in FIGURE 1, only one of the Fiber Bragg Grating Sensors (3.2) is fixed to the segment of magnetostrictive material 2. It does not matter which of the sensors is fixed, it could be the first or second one. The method of fixation may be made, for example, using epoxy or cyanoacrylic glue, or by some other method that may be used to connect the sensors to segments whose distortions or temperature range you wish to measure. Only as an example, in FIGURE 1, Sensor 3.2 is fixed to a segment of magnetostrictive material 2, while Sensor 3.1 is free. This means that Sensor 3.1 will undergo alterations in its $\lambda_1$ wavelength, as a function of changes of temperature, while sensor 3.2, in addition to this type of alteration, will also have its $\lambda_2$ wavelength modified when suffering deformations following the expansion or contraction of the segment of magnetostrictive material 2 caused by changes in the magnetic field.

Only as an example, in FIGURE 1, Sensor 3.2 is presented in the axial direction, aligned to the axis defined for rod 4. Since a magnetostrictive material undergoes changes in size in reaction to variations in the magnetic field in which it is immersed, keeping, however, its volume constant, sensor 3.2 (which is fixed to the segment of magnetostrictive material 2), may be aligned in any direction.

The Reading system 6 sends a beam of light through the optical fiber 5. When it reaches sensor 3.1, part of the incident light is reflected in the $\lambda_1$ wavelength of sensor 3.1, while the remaining part of the light is transmitted, arriving at sensor 3.2. When the light falls on sensor 3.2, the same process occurs: part of the incident light is reflected in the $\lambda_2$ wavelength of sensor 3.2, and the remaining part of the light is transmitted, following along the optical fiber 5. The light reflected by each of the sensors (3.1 and 3.2) is recaptured by the reading system 6, where it is analyzed.

The reading system 6 contains a broadband light source, a coupler and an analysis and detection system.

When a displacement between the magnet 1 and the rod 4 occurs, the reading system 6 will measure a different reading of $\lambda_2$.

If there is a variation in temperature in the area of sensors 3.1 and 3.2, the reading system 6 will measure different readings of both $\lambda_1$ and $\lambda_2$. The device in accordance with an example embodiment of the present invention is pre-calibrated by temperature, that is, curves that give information on variations of $\lambda_1$ and $\lambda_2$ with the temperature are previously known. In this basic configuration of the present invention, pre-calibration is carried out at Sensor 3.2, which is fixed to the segment of magnetostrictive material 2, in such a way that the temperature calibration curve for Sensor 3.2 will already take into account the effect of thermal distortion on the segment of magnetostrictive material 2. Since there will be no practical temperature gradient in the short distance between Sensors 3.1 and 3.2, when equation (I) is applied successively to sensors 3.1 and 3.2, it allows temperature compensation and the identification of the change of the $\lambda_2$ portion which is exclusively due to the effect the magnetic field has on the segment of magnetostrictive material 2.

The values that the $\lambda_2$ wavelength takes on as a function of the relative position of rod 4 to magnet 1, with the possible effect of temperature already deducted, provide a calibration curve of the position of the device in accordance with an example embodiment of the present invention, in the basic configuration shown in FIGURE 1.

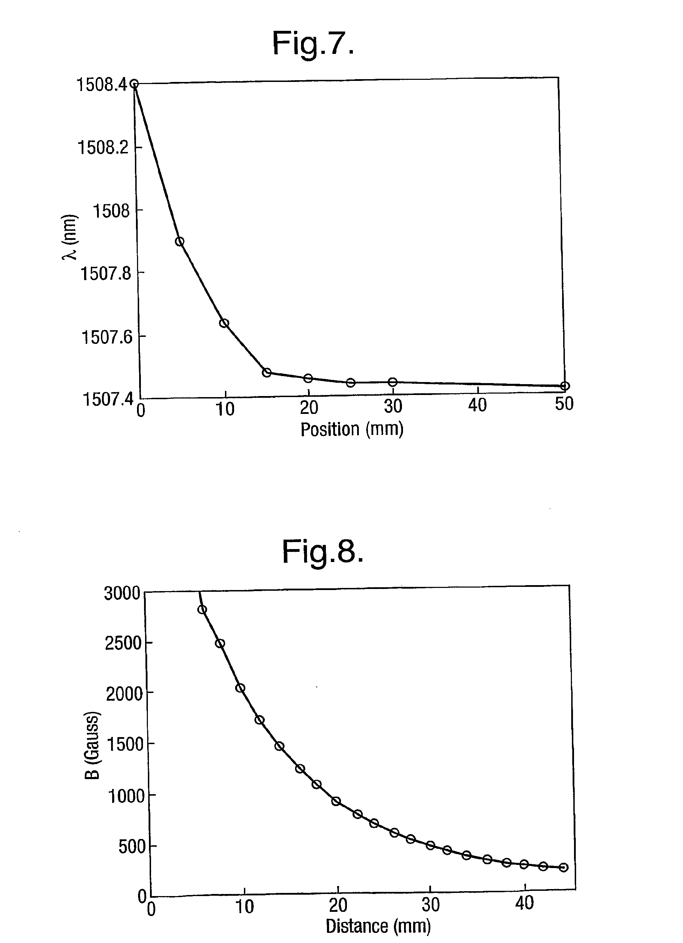

The graph of FIGURE 7 is an example of a calibration curve, built from an application of the basic configuration of the present invention, using a solid magnet 1. Point zero of the position mark is when magnet 1 is placed next to the segment of magnetostrictive material 2. This element generates a magnetic field such as the one presented, as a function of the axial distance, as shown in the graph of FIGURE 8. Since in this application the field decays along the axial length, the increase in the relative distance between the rod 4 and the magnet 1 causes a reduction in the size of the segment of magnetostrictive material 2 in the axial direction. If the temperature remains constant, and Sensor 3.2 stays aligned in the axial direction, as exemplified in FIGURE 1's drawing, a reduction in the value of $\lambda_2$ will occur. This is what is shown in the curve of FIGURE 7, including compensation of the previously described temperature.

In the case of all three variants of the basic configuration of the present invention described below, the passage of the light is the same as previously described for the basic configuration of the invention: part of the light emitted by the reading system 6 is reflected by Sensors 3.1 and 3.2 in their respective wavelengths, $\lambda_1$ and $\lambda_2$, and then returns to the reading system 6, where it is analyzed.

In the first variant of the basic configuration of the present invention, shown in FIGURE 2, the only difference between it and the basic configuration shown in FIGURE 1 is that the two Fiber Bragg Grating Sensors, 3.1 and 3.2 are each fixed upon the same segment of magnetostrictive material 2. In this configuration (FIGURE 2), sensors 3.1 and 3.2 are aligned in different directions. They should not be parallel. In this way, when a relative displacement occurs between the magnet 1 and the rod 4, both sensors 3.1 and 3.2 will suffer different deformations due to the magnetic effects on the segment of magnetostrictive material 2. Each of the Sensors, 3.1 and 3.2, will be influenced by size alterations in the segment of magnetostrictive material 2 in the direction in which the Sensor, be it 3.1 or 3.2, is aligned. In this way, in the variant shown in FIGURE 2, when a displacement between the magnet 1 and the rod 4 occurs, the reading system 6 will measure different readings for $\lambda_1$ and $\lambda_2$, respectively. Where there is a temperature variation in the region of the Sensors, the reading system 6 will also measure a range of readings from $\lambda_1$ and $\lambda_2$, but this range does not follow the same pattern of variation due to the relative change of position between the magnet 1 and the rod 4.

The distinct distortions caused by the magnetic effect on sensors 3.1 and 3.2 are related by the constant volume of the magnetostrictive material segment 2. As described above, the device is pre-calibrated by temperature. In this first variant (FIGURE 2) of the basic configuration of the present invention, pre-calibration is carried out at Sensors 3.1 and 3.2, which are fixed to the segment of magnetostrictive material 2, in such a way that the respective temperature calibration curve for these Sensors will already take into account the effect of thermal distortion on the segment of magnetostrictive material 2. With the wavelength values reflected by Sensors 3.1 and 3.2, and the information regarding the distortion suffered by each sensor, the same equation (I) is applied for each of the sensors, carrying out the same process for compensation of the effects of temperature for the basic configuration of the present invention. Since wavelengths $\lambda_1$ and $\lambda_2$ are linked in function with the volume of the magnetostrictive material segment 2, it does not matter whether $\lambda_1$ or $\lambda_2$ is used to construct a calibration curve for the position of the device. The wavelength values chosen, be they $\lambda_1$ or $\lambda_2$, assuming the function of the position of rod 4 relative to magnet 1, with the possible effects of temperature already deducted, will provide a calibration curve of the position of the device in accordance with an example embodiment of the present invention, in the first variant shown in FIGURE 2.

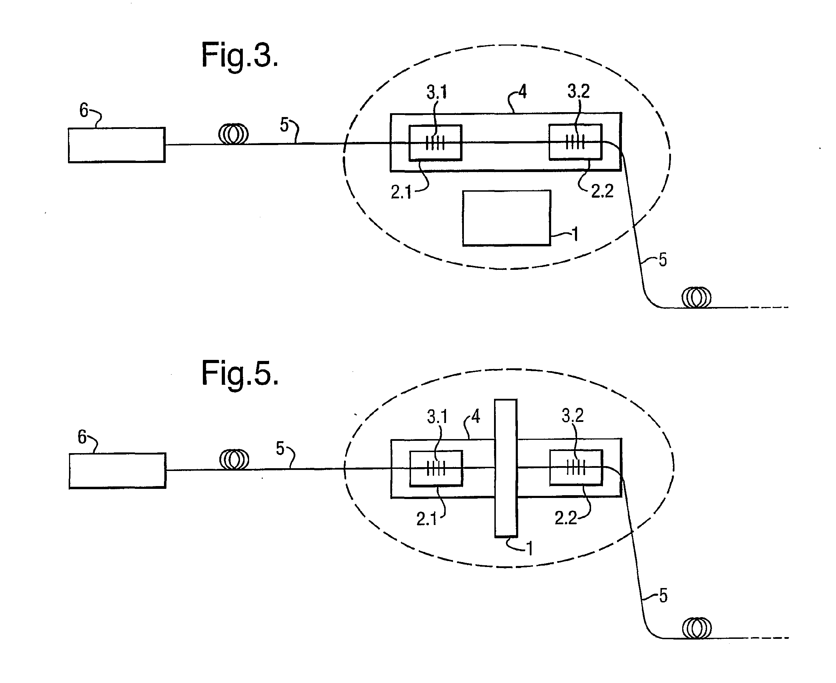

A second variant of the basic configuration of device in accordance with an example embodiment of the present invention is presented in FIGURE 3. This variant may be seen as a result of connecting two equal modules in the basic configuration of the invention as diagramed in FIGURE 1, except that instead of using only one segment of magnetostrictive material 2, in this variant in FIGURE 3, two identical segments of magnetostrictive material, 2.1 and 2.2, are used, each one fixed to one of the ends of the rod 4. On each one of the segments of magnetostrictive material (2.1 and 2.2), a Fiber Bragg Grating Sensor (3.1 or 3.2) is fixed, respectively. In FIGURE 3, Sensors 3.1 and 3.2 are presented as aligned in the same direction, parallel to the rod 4, only as an example of a method of easy alignment. Sensors 3.1 and 3.2 may be oriented in other directions, and may be different from each other. Making a more complex choice does not offer greater advantages. Magnet 1 is supported and positioned parallel with the rod 4, in such a way that relative displacements between both are allowed to occur in only one direction as determined by movement of the rod 4. In this configuration of the invention, segments of magnetostrictive material 2.1 and 2.2 will undergo different distortions in function of the different positions of each one in relation to the magnet 1. As one moves closer to the magnet, the other moves further away, and vice versa.

Compared with the basic configuration of the present invention, presented in FIGURE 1, and with the first variant, shown in FIGURE 2, this variant, shown in FIGURE 3, presents the advantage of allowing an extension of the dynamic range, as the reduction of the magnetic field's effect on the segment of magnetostrictive material 2.1, for example, due to a great distance between this segment 2.1 and magnet 1, may be compensated by the increase of the effect on the other segment of magnetostrictive material (2.2).

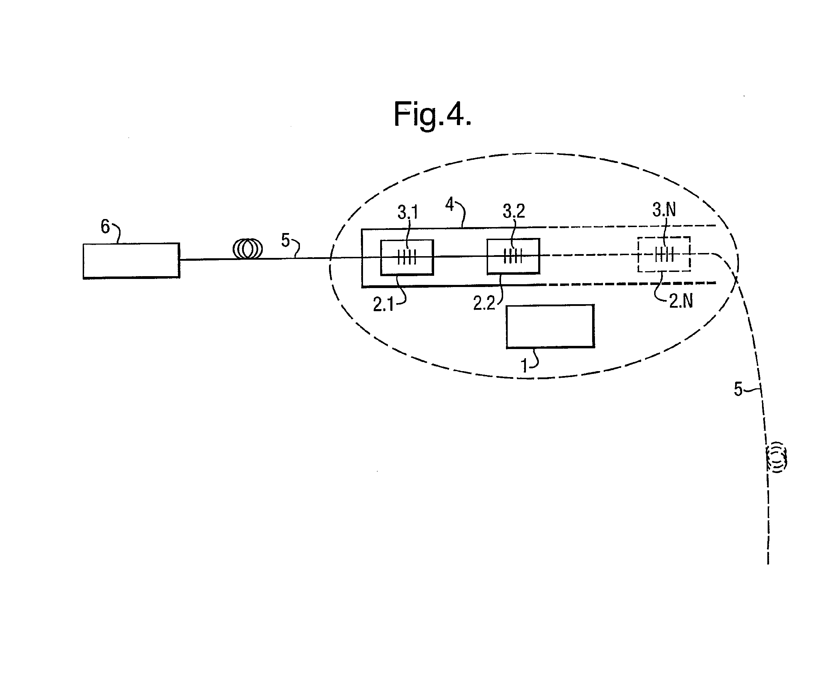

This configuration of the present invention, shown in FIGURE 3, also makes it possible to extend the dynamic range even more through connecting several modules like these. Several Fiber Bragg Grating Sensors, with different wavelengths, are each fixed upon one of the various segments of magnetostrictive material spaced along the rod 4, as shown in the drawing of FIGURE 4. The alterations in the wavelengths of the various sensors, captured by the reading system 6, supply information on the relative displacement between the magnet 1 and the rod 4. The number of sensors to be used, the distances between them and the values of their wavelengths can be calculated as a function of a specific given application. The calibration relative to the position for this set of various connected modules will be described below in more detail.

The device, in accordance with this example embodiment of the present invention, is pre-calibrated by temperature, as previously described. In this second variant of the basic configuration of the invention, the pre-calibration is carried out through the two sensors, 3.1 and 3.2, respectively, fixed upon the segments of magnetostrictive materials (2.1 and 2.2), so that the respective calibration curves of these temperature sensors have already taken the effects of the thermal distortion of the respective segments of magnetostrictive material (2.1 and 2.2) into account. With the values of the reflected wavelengths from sensors 3.1 and 3.2, and the information referring to the deformations undergone by each sensor, equation (I) is applied to each one of the sensors. The procedure for calibrating the position for this second variant of the device will be described in detail below, together with the description of the third variant of the device in accordance with an example embodiment of the present invention.

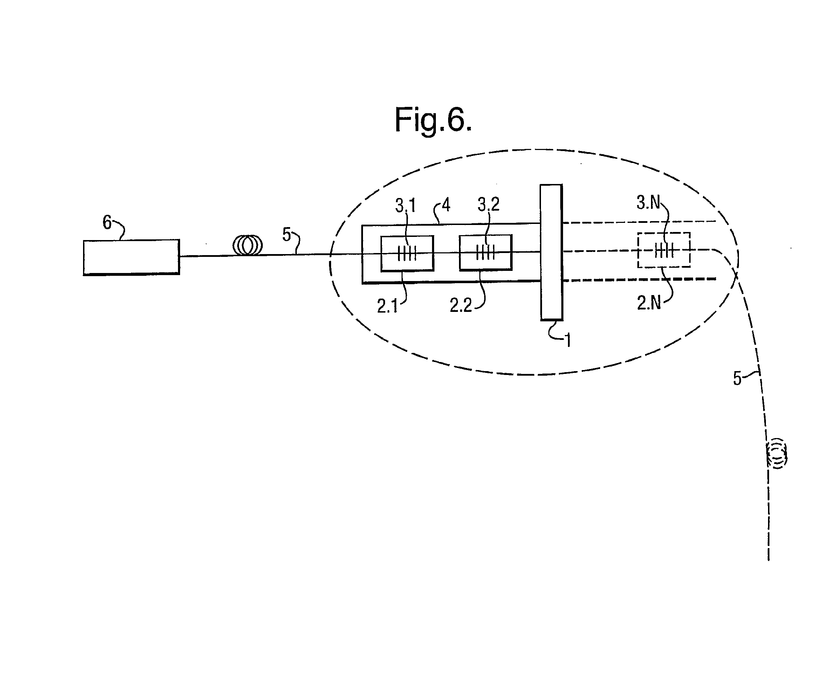

A third variant of the basic configuration of the device in accordance with an example embodiment of the present invention is presented in FIGURE 5. In this variant, the segments of magnetostrictive material 2.1 and 2.2, as well as the Fiber Bragg Grating Sensors 3.1 and 3.2 are placed on the ends of the rod 4, in the same way as described previously regarding the second variant of the basic configuration of the present invention. In a similar way, the relative displacement between the magnet 1 and the rod 4 is allowed along the axis as defined by the rod 4. However, in this configuration of FIGURE 4, the magnet 1, which may be in cylindrical format, for example, has a hole, preferably in the center, so that the rod 4 may pass through it. Compared with a configuration where the magnet 1 runs outside the rod 4, as in the diagram in FIGURE 3, the configuration shown in FIGURE 5 shows the advantage of providing greater proximity between the magnet 1 and the segments of magnetostrictive material (2.1 and 2.2), which intensifies the magnetic field, causing an increase in the dynamic range. Moreover, an analogous form has already been described in the second variant. This third variant of the basic configuration of the present invention, diagramed in FIGURE 5 also makes it possible to extend the dynamic range even more through connecting several modules like these. FIGURE 6 shows the diagram of the connection of modules like the third variant of the basic configuration of the invention. The relative calibration of the position for this set of various connected modules will be given by a sequence of calibration curves, each of which are constructed using a pair of consecutive sensors, covering, in this way, the entire length of the Rod. The construction of the calibration curve for the pair of sensors (3.1 and 3.2) will be described in detail below.

In this third variant of the basic configuration of the invention, the pre-calibration is based on temperature and is carried out in the same manner as described previously for the second variant, through the two sensors, 3.1 and 3.2, respectively, fixed upon the segments of magnetostrictive materials (2.1 and 2.2), so that the respective calibration curves of these temperature sensors have already taken the effects of the thermal distortion of the respective segments of magnetostrictive material (2.1 and 2.2) into account. With the values of the reflected wavelengths from sensors 3.1 and 3.2, and the information referring to the deformations undergone by each sensor, equation (I) is applied to each one of the sensors.

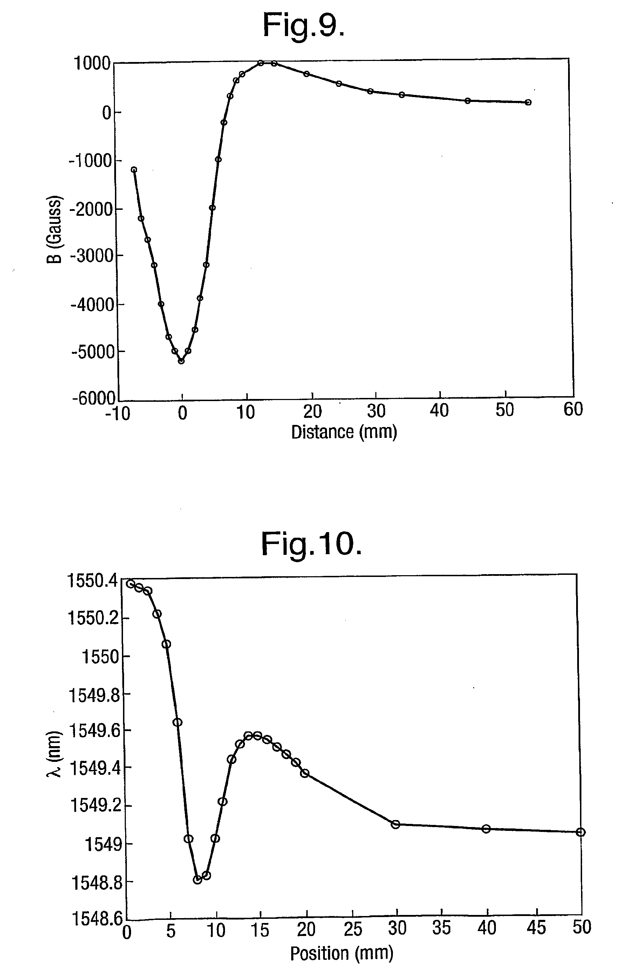

However, the more complex geometry of magnet 1 also translates into a magnetic field whose spatial dependency is more complex. FIGURE 9 shows a graph of the variation of the magnetic field with distance for an application of this third variant of the basic configuration in accordance to the present invention. In FIGURE 10, constructed with measurements obtained from the same application, it can be seen that there is not a one to one relationship between the wavelength of one of the sensors and the position of the rod 4 relative to the magnet 1. This problem can be solved by establishing a relation-

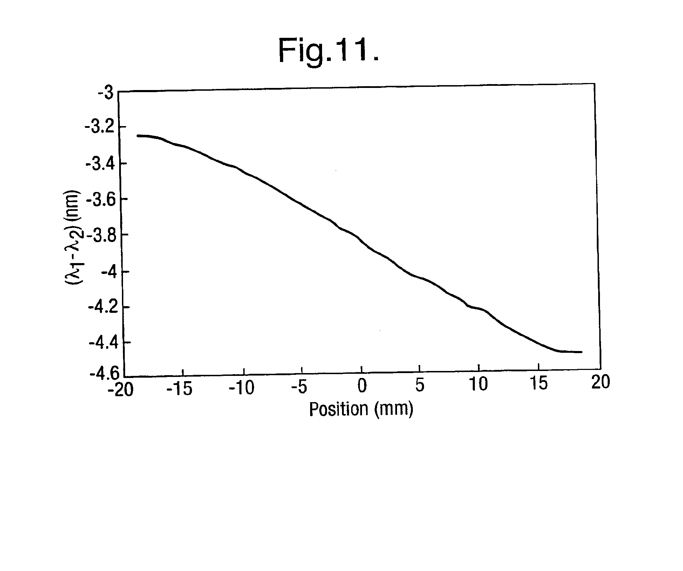

ship between the difference ($\lambda_1 - \lambda_2$) in the wavelengths of the sensors (3.1 and 3.2), and the position. Then, an iterative process is carried out that alters the distance between Sensors 3.1 and 3.2, with the objective of maximizing the dynamic range of positions, keeping a one to one relationship between the difference of the wavelengths and the position. Taking into consideration this difference between the wavelengths of Sensors 3.1 and 3.2, there is still the advantage of compensation for the possible effect of the temperature. The graph in FIGURE 11, constructed from the same application that formed the basis for the construction of FIGURES 9 and 10, is an example relating the difference between the wavelengths of Sensors 3.1 and 3.2 and the position, in this third variant of the basic configuration in accordance with an example embodiment of the present invention. A useful one-to-one relationship between position on $\lambda_1 - \lambda_2$ can be seen.

In relation to the existing position transducers, the invention presents innumerable advantages propitiated by optical fiber technology: its great simplicity of construction, reduced size and weight, the possibility of making measurements in aggressive environments such as, for example, at high temperatures, and the possibility of taking remote readings, without needing electronic circuits at the point of measurement. Moreover, in contrast with transducers based on electrical induction, the present invention avoids the use of cables and electrical circuits close to the place of measurement. However, in the same manner as those transducers, the present invention is capable of supplying measurements of great precision and trustworthiness, because, due to the absence of physical contact with the magnetic field source, the sensing element does not wear out.

The device, in accordance with example embodiments of the present invention, offers other advantages due to the use of existing optical fiber transducers: it can easily be multiplexed, it does not present problems with surfaces, whether they are clean or not or have a highly reflective quality, and since the light remains inside the fiber, there is no need to make a mechanical alignment.

A supporting member in the form of a rod (e.g. a cylindrical rod) has been disclosed and is preferred. However, any means for supporting the magnetostrictive material and allowing it to move relative to the magnet along a single axis can be used.

While the invention has been described in connection with what is presently considered to be the most practical and preferred embodiments, it is to be understood that the invention is not to be limited to the disclosed embodiments, but on the contrary, is intended to cover various modifications and equivalent arrangements included within the scope of the appended claims.

**Claims**

1. A position transducer including:

   a magnetic or electromagnetic element (1);
   at least one segment of magnetostrictive material (2);
   at least two Fiber Bragg Grating Sensors (3.1, 3.2);
   a supporting member (7) movable with respect to the magnetic or electromagnetic element (1);
   an optical fiber (5); and
   a remote reading system (6) containing a broadband light source, a coupler and a spectral analysis and detection system;
   wherein
   at least one of said two sensors (3.2) is fixed to said at least one segment of magnetostrictive material (2), said at least one segment of magnetostrictive material (2) is supported by said supporting member (4), and the movement of the supporting member (4) relative to the magnetic or electromagnetic element (1) is limited to a single axis.

2. The position transducer according to claim 1, wherein said at least two Fiber Bragg Grating Sensors (3.1, 3.2) have different wavelengths.

3. The position transducer according to claim 1 or 2, wherein said Fiber Bragg Grating Sensors (3.1, 3.2) are made of the same optical fiber (5).

4. The position transducer according to any one of the preceding claims, wherein said spectral analysis and detection system is used to analyse light received from said at least two Fiber Bragg Grating Sensors (3.1, 3.2) and to determine position based on the wavelength of detected light.

5. The position transducer according to any one of the preceding claims, wherein only a single, segment of magnetostrictive material (2) is provided, with only one of the Fiber Bragg Grating Sensors (3.1) fixed upon the segment (2).

6. The position transducer according to any one of claims 1 to 4, wherein only a single segment of magnetostrictive material (2) is provided, with both Fiber Bragg Grating Sensors (3.1, 3.2) fixed to the segment (2), oriented in different directions.

7. The position transducer according to any one of claims 1 to 4, wherein each of the Fiber Bragg Grating Sensors (3.1, 3.2) is fixed to a different segment (2) of magnetostrictive material (2).

8. The position transducer according to claim 7, wherein the segments (2) of magnetostrictive material are spaced along the supporting member (4) in such a way as to allow a one-to-one identification of the supporting member's position in relation to the magnetic/electromagnetic element.

9. The position transducer according to any one of the preceding claims, wherein the magnetic or electromagnetic element (1) is solid and is located in front of or at the side of the supporting member (4).

10. The position transducer according to any one of claims 1 to 8, wherein the magnetic or electromagnetic element (1) contains a hole and is crossed through by the supporting member (4).

11. The position transducer according to any one of the preceding claims, wherein the magnetic or electromagnetic element (1) is made of NdFeB (Neodymium Iron Boron).

12. The position transducer according to any one of the preceding claims, wherein the segment(s) of magnetostrictive material (2) is/are made of metal alloys of TbDyFe (Terbium, Dysprosium and Iron).

13. The position transducer according to claim 13, wherein the segment(s) of magnetostrictive material (2) is/are made of TX or Terphenol-D.

14. The position transducer of any one of the preceding claims, wherein said supporting member (4) is a rod and said rod is allowed to move only in the direction of its longitudinal axis.

15. The position transducer of any one of the preceding claims, wherein said supporting member (4) is made of a material that is impermeable to magnetic fields.

16. An outflow control valve comprising the position sensor of any one of the preceding claims.

17. An oil well comprising the outflow control valve of claim 17.

18. A method of determining a position along a single axis of a magnetic or electromagnetic element (1) relative to a supporting member (4), said supporting member (4) supporting at least one segment of magnetostrictive material (2), said method comprising:

routing broadband light through a first Fiber Bragg Grating Sensor (3.1) and a second Fiber Bragg Grating Sensor (3.2), wherein said second Fiber Bragg Grating Sensor (3.2) is fixed to said at least one segment of magnetostrictive material (2); and
receiving the light and performing spectral analysis to determine the relative position.

19. The method of claim 18, further comprising:

determining a temperature change ($\Delta T$) from a wavelength change ($\lambda_1$) due to said first Fiber Bragg Grating Sensor (3.1);
using said temperature change ($\Delta T$) to determine a position using the signal from said second Fiber Bragg Grating Sensor (3.2).

20. The method of claim 18 or 19, wherein said light is routed through an optical fiber (3) and the first and second Fiber Bragg Grating Sensors have different wavelengths.

**Patentansprüche**

1. Positionsgeber, umfassend:

ein magnetisches oder elektromagnetisches Element (1);
mindestens ein Segment aus magnetostriktivem Material (2);
mindestens zwei Faser-Bragg-Gitter-Sensoren (3.1, 3.2.);
ein Stützelement (7), das bezüglich des magnetischen oder elektromagnetischen Elements (1) beweglich ist;
eine optische Faser (5); und
ein Fernlesesystem (6), das eine Breitbandlichtquelle, einen Koppler und ein Spektralanalyse- und Detektionssystem enthält;
wobei
mindestens einer der zwei Sensoren (3.2) an dem mindestens einen Segment aus magnetostriktivem Material (2) befestigt ist, wobei das mindestens eine Segment aus magnetostriktivem Material (2) von dem Stützelement (4) gestützt wird und die Bewegung des Stützelements (4) relativ zu dem magnetischen oder elektromagnetischen Element (1) auf eine einzige Achse beschränkt ist.

2. Positionsgeber nach Anspruch 1, wobei die mindestens zwei Faser-Bragg-Gitter-Sensoren (3.1, 3.2) unterschiedliche Wellenlängen aufweisen.

3. Positionsgeber nach Anspruch 1 oder 2, wobei die Faser-Bragg-Gitter-Sensoren (3.1, 3.2) aus der gleichen optischen Faser (5) bestehen.

4. Positionsgeber nach einem der vorhergehenden Ansprüche, wobei das Spektralanalyse- und Detektionssystem verwendet wird, um von den mindestens zwei Faser-Bragg-Gitter-Sensoren (3.1, 3.2) empfangenes Licht zu analysieren und um beruhend auf der Wellenlänge detektierten Lichts eine Position zu ermitteln.

5. Positionsgeber nach einem der vorhergehenden Ansprüche, wobei nur ein einzelnes Segment aus magnetostriktivem Material (2) vorgesehen ist, wobei nur einer der Faser-Bragg-Gitter-Sensoren (3.1) auf dem Segment (2) befestigt ist.

6. Positionsgeber nach einem der Ansprüche 1 bis 4, wobei nur ein einzelnes Segment aus magnetostriktivem Material (2) vorgesehen ist, wobei beide an dem Segment (2) befestigte Faser-Bragg-Gitter-Sensoren (3.1, 3.2.) in unterschiedlichen Richtungen ausgerichtet sind.

7. Positionsgeber nach einem der Ansprüche 1 bis 4, wobei jeder der Faser-Bragg-Gitter-Sensoren (3.1, 3.2) an einem anderen Segment (2) aus magnetostriktivem Material (2) befestigt ist.

8. Positionsgeber nach Anspruch 7, wobei die Segmente (2) aus magnetostriktivem Material entlang des Stützelements (4) so beabstandet sind, dass eine Eins-zu-Eins-Identifizierung der Position des Stützelements in Beziehung zu dem magnetischen/elektromagnetischen Element ermöglicht wird.

9. Positionsgeber nach einem der vorhergehenden Ansprüche, wobei das magnetische oder elektromagnetische Element (1) massiv ist und sich vor dem Stützelement (4) oder an der Seite desselben befindet.

10. Positionsgeber nach einem der Ansprüche 1 bis 8, wobei das magnetische oder elektromagnetische Element (1) ein Loch enthält und von dem Stützelement (4) durchsetzt wird.

11. Positionsgeber nach einem der vorhergehenden Ansprüche, wobei das magnetische oder elektromagnetische Element (1) aus NdFeB(Neodym-Eisen-Bor) besteht.

12. Positionsgeber nach einem der vorhergehenden Ansprüche, wobei das Segment/die Segmente aus magnetostriktivem Material (2) aus Metalllegierungen von TbDyFe (Terbium, Dysprosium und Eisen) besteht/bestehen.

13. Positionsgeber nach Anspruch 13, wobei das Segment/die Segmente aus magnetostriktivem Material (2) aus TX oder Terfenol-D besteht/bestehen.

14. Positionsgeber nach einem der vorhergehenden Ansprüche, wobei das Stützelement (4) eine Stange ist und die Stange sich nur in der Richtung ihrer Längsachse bewegen darf.

15. Positionsgeber nach einem der vorhergehenden Ansprüche, wobei das Stützelement (4) aus einem Material besteht, das gegenüber Magnetfeldern undurchlässig ist.

16. Ausströmsteuerventil, welches den Positionssensor nach einem der vorhergehenden Ansprüche umfasst.

17. Ölquelle, welche das Ausströmsteuerventil nach Anspruch 17 umfasst.

18. Verfahren zum Ermitteln einer Position entlang einer einzelnen Achse eines magnetischen oder elektromagnetischen Elements (1) relativ zu einem Stützelement (4), wobei das Stützelement (4) mindestens ein Segment aus magnetostriktivem Material (2) stützt, wobei das Verfahren umfasst:

Leiten von Breitbandlicht durch einen ersten Faser-Bragg-Gitter-Sensor (3.1) und einen zweiten Faser-Bragg-Gitter-Sensor (3.2), wobei der zweite Faser-Bragg-Gitter-Sensor (3.2) an dem mindestens einen Segment aus magnetostriktivem Material (2) befestigt ist; und
Empfangen des Lichts und Durchführen von Spektralanalyse, um die relative Position zu ermitteln.

19. Verfahren nach Anspruch 18, welches weiterhin umfasst:

Ermitteln einer Temperaturänderung ($\Delta$T) aus einer Wellenlängenänderung ($\lambda_1$) infolge des ersten Faser-Bragg-Gitter-Sensors (3.1);
Nutzen der Temperaturänderung ($\Delta$T), um mithilfe des Signals von dem zweiten Faser-Bragg-Gitter-Sensor (3.2) eine Position zu ermitteln.

20. Verfahren nach Anspruch 18 oder 19, wobei das Licht durch eine optische Faser (3) geleitet wird und der erste und der zweite Faser-Bragg-Gitter-Sensor unterschiedliche Wellenlängen aufweisen.

## Revendications

1. Transducteur de position comprenant :

un élément magnétique ou électromagnétique (1) ;
un segment au moins de matériau magnétostrictif (2) ;
deux capteurs au moins à fibre optique à réseau de Bragg (3.1, 3.2) ;
un élément de support (7) qui peut se déplacer par rapport à l'élément magnétique ou électromagnétique (1) ;

une fibre optique (5) ; et

un système de mesure à distance (6) qui contient une source de lumière à large bande, un coupleur et un système de détection et d'analyse spectrale ;

dans lequel :

l'un au moins desdits deux capteurs (3.2) est fixé sur ledit ou lesdits segments de matériau magnétostrictif (2), ledit ou lesdits segments de matériau magnétostrictif (2) sont supportés par ledit élément de support (4), et le déplacement de l'élément de support (4) par rapport à l'élément magnétique ou électromagnétique (1) est limité à un seul axe.

2. Transducteur de position selon la revendication 1, dans lequel lesdits deux capteurs au moins à fibre optique à réseau de Bragg (3.1, 3.2) présentent des longueurs d'onde différentes.

3. Transducteur de position selon la revendication 1 ou la revendication 2, dans lequel lesdits capteurs à fibre optique à réseau de Bragg (3.1, 3.2) sont réalisés dans la même fibre optique (5).

4. Transducteur de position selon l'une quelconque des revendications précédentes, dans lequel ledit système de détection et d'analyse spectrale est utilisé de façon à analyser la lumière reçue par lesdits deux capteurs au moins à fibre optique à réseau de Bragg (3.1, 3.2) et de façon à déterminer une position sur la base de la longueur d'onde de la lumière détectée.

5. Transducteur de position selon l'une quelconque des revendications précédentes, dans lequel un seul segment de matériau magnétostrictif (2) est prévu, un seul capteur à fibre optique à réseau de Bragg (3.1) étant fixé sur le segment (2).

6. Transducteur de position selon l'une quelconque des revendications 1 à 4, dans lequel un seul segment de matériau magnétostrictif (2) est prévu, deux capteurs à fibre optique à réseau de Bragg (3.1, 3.2) étant fixés sur le segment (2), et orientés dans des directions différentes.

7. Transducteur de position selon l'une quelconque des revendications 1 à 4, dans lequel chacun des capteurs à fibre optique à réseau de Bragg (3.1, 3.2) est fixé sur un segment différent (2) de matériau magnétostrictif (2).

8. Transducteur de position selon la revendication 7, dans lequel les segments (2) de matériau magnétostrictif sont espacés le long de l'élément de support (4) de façon à permettre une identification bijective de la position de l'élément de support par rapport à l'élément magnétique/électromagnétique.

9. Transducteur de position selon l'une quelconque des revendications précédentes, dans lequel l'élément magnétique ou électromagnétique (1) est plein et se situe devant l'élément de support (4) ou sur le côté de celui-ci.

10. Transducteur de position selon l'une quelconque des revendications 1 à 8, dans lequel l'élément magnétique ou électromagnétique (1) contient un trou et est traversé par l'élément de support (4).

11. Transducteur de position selon l'une quelconque des revendications précédentes, dans lequel l'élément magnétique ou électromagnétique (1) est réalisé en NdFeB (néodyme fer bore).

12. Transducteur de position selon l'une quelconque des revendications précédentes, dans lequel le ou les segments de matériau magnétostrictif (2) sont réalisés en alliages métalliques de TbDyFe (terbium, dysprosium et fer).

13. Transducteur de position selon la revendication 13, dans lequel le ou les segments de matériau magnétostrictif (2) sont réalisés en TX ou en Terphénol-D.

14. Transducteur de position selon l'une quelconque des revendications précédentes, dans lequel ledit élément de support (4) est une tige et ladite tige a la possibilité de se déplacer seulement dans la direction de son axe longitudinal.

15. Transducteur de position selon l'une quelconque des revendications précédentes, dans lequel ledit élément de support (4) est réalisé dans un matériau qui est imperméable aux champs magnétiques.

16. Soupape de régulation d'écoulement comprenant le capteur de position selon l'une quelconque des revendications précédentes.

17. Puits de pétrole comprenant la soupape de régulation d'écoulement selon la revendication 17.

18. Procédé destiné à déterminer une position le long d'un seul axe d'un élément magnétique ou électromagnétique (1) par rapport à un élément de support (4), ledit élément de support (4) supportant un segment au moins de matériau magnétostrictif (2), ledit procédé comprenant les étapes consistant à :

faire se propager une lumière à large bande à travers un premier capteur à fibre optique à réseau de Bragg (3.1) et à travers un second capteur à fibre optique à réseau de Bragg (3.2), dans lequel ledit second capteur à fibre optique à réseau de Bragg (3.2) est fixé sur ledit ou lesdits segments de matériau magnétostrictif (2) ; et recevoir la lumière et exécuter une analyse spectrale de façon à déterminer la position relative.

19. Procédé selon la revendication 18, comprenant en outre les étapes consistant à :

déterminer une variation de température ($\Delta$T) à partir d'une variation de longueur d'onde ($\lambda_1$) due audit premier capteur à fibre optique à réseau de Bragg (3.1) ;
utiliser ladite variation de température ($\Delta$T) de façon à déterminer une position en utilisant le signal qui provient dudit second capteur à fibre optique à réseau de Bragg (3.2).

20. Procédé selon la revendication 18 ou la revendication 19, dans lequel ladite lumière se propage à travers une fibre optique (3), et les premier et second capteurs à fibre optique à réseau de Bragg présentent des longueurs d'onde différentes.

# Fig.1.

# Fig.2.

EP 1 882 160 B1

Fig.3.

Fig.5.

EP 1 882 160 B1

Fig.4.

Fig.6.

# Fig.7.

# Fig.8.

# Fig.9.

# Fig.10.

# Fig.11.

**EP 1 882 160 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10253399 A
- US 6232769 B1
- US 5821743 A
- EP 1020734 A
- US 5394488 A

**Non-patent literature cited in the description**

- **F.RUAN ; Y.ZHOU ; Y.LOY ; S.MEI ; CH.LIAW ; J.LIU.** A Precision Fiber Optic Displacement Sensor Based on Reciprocal Interferometry. *Optics Communication,* 2000, 105-112
- **Y. TAKAMATSU ; K. TOMOTA ; T. YAMASHITA.** *Fiber-optic Position Sensor; Sensors and Actuators,* 1990, 435-437
- **KOSHI KONDO.** Dynamic behavior of Terfenol-D. *J. of Alloys and Compounds,* 1997, vol. 258, 56-60
- **E.HRISTOFOROU ; H.CHIRIAC ; M.NEAGU ; V.KARAYANNIS.** On the calibration of position sensor based on magnetic delay lines. *Sensors and Actuators,* 1997, vol. A 59, 89-93
- **E.HRISTOFOROU ; D.NIARCHOS ; H.CHIRIAC ; M.NEAGU.** A coily magnetostrictive delay line arrangement for sensing applications. *Sensors and Actuators,* 2001, vol. A 91, 91-94
- **H.CHIRIAC ; C.S.MARINESCU.** New position sensor based on ultra acoustic standing waves in FeSiB amorphous wires. *Sensors and Actuators,* 2000, vol. 81, 174-175
- **J.MORA ; A.DÍEZ ; J.L.CRUZ ; M.V. ANDRÉS.** A Magnetostrictive sensor interrogated by fiber gratings for DC-current and Temperature discrimination. *IEEE Photonics Tech. Letters,* 2000, vol. 12, 1680-1682